# EUROPEAN PATENT APPLICATION

(11) **EP 1 923 740 A1**
(43) Date of publication of application: **21.05.2008**
(21) Application number: 07021296.4
(22) Date of filing: 31.10.2007
(51) Int. Cl.: G03B 27/62, G03G 15/00, H04N 1/00

(54) **Image forming apparatus**

(30) Priority: 20.11.2006 JP 2006313097
(71) Applicant: Murata Machinery, Ltd., 3 Minami Ochiai-cho, Kisshoin Minami-ku, Kyoto-shi, Kyoto (JP)
(72) Inventor: Nakahara, Hidetada, Kyoto-shi Kyoto 612-8686 (JP); Fukumura, Atsushi, Kyoto-shi Kyoto 612-8686 (JP)
(74) Representative: Schoppe, Fritz

(57) **Abstract**

An image forming apparatus includes a main body portion having on an upper surface thereof a platen glass on which a document is placed; a pressing plate portion openable/closable with respect to the upper surface of the main body portion, and an operation unit enabling performance of an open/close operation of the pressing plate portion by hand. The operation unit includes a first operation concave portion formed on the pressing plate portion side and a second operation concave portion formed on the main body portion side; and the first operation concave portion and the second operation concave portion are combined to form one opening when the pressing plate portion is closed.

## Description

### CROSS-REFERENCE TO RELATED APPLICATIONS

This application claims priority to Japanese Patent Application No.2006-313097, filed on November 20, 2006 which application is hereby incorporated by reference in its entirety.

### BACKGROUND OF THE INVENTION

### 1. Field of the Invention

The present invention relates to an image forming apparatus including a main body portion having on an upper surface thereof a document placing surface on which a document is placed, a pressing plate portion openable/closable with respect to the upper surface of the main body portion, and an operation unit for enabling performance of an open/close operation of the pressing plate portion by hand.

### 2. Description of Related Art

Such an image forming apparatus (facsimile apparatus, digital multifunction peripheral, copying machine and the like) is configured such that a document is placed on a document placing surface arranged on the upper surface of the main body portion, and the pressing plate portion is openable/closable with respect to the main body portion so as to press the placed document. A hinge portion for opening/closing the pressing plate portion is arranged on a far side of the main body portion, so that the pressing plate portion can be opened and closed in the up and down direction using the operation unit on a near side. A configuration disclosed in Japanese Laid-Open Patent Publication No. 2002-365742 is generally adopted for the operation unit for use in an open/close operation of the pressing plate portion. The pressing plate portion of the image forming apparatus is formed with an operation concave portion on the near side, so that the pressing plate portion can be lifted upward by inserting the fingers into the operation concave portion.

The pressing plate portion includes a pressing sheet for pressing down a document and a platen cover; when the operation concave portion is formed in the pressing plate portion, a height space for such amount must be ensured. Therefore, a height of the platen cover increases, and a height of the entire apparatus also increases. If the dimension in the height direction of the operation concave portion is reduced to suppress the height, it becomes difficult to insert the fingers, and the operability worsens.

### BRIEF SUMMARY OF THE INVENTION

In order to solve the problems described above, preferred embodiments of the present invention provide an image forming apparatus in which a height of the entire apparatus is greatly reduced without affecting the operability in the case of lifting the pressing plate portion.

In order to overcome the problems described above, preferred embodiments of the present invention provide an image forming apparatus including a main body portion having on an upper surface thereof a document placing surface on which a document is placed; a pressing plate portion openable/closable with respect to an upper surface of the main body portion; and an operation unit for allowing performance of an open/close operation of the pressing plate portion by hand. The operation unit includes a first operation concave portion formed on the pressing plate portion side and a second operation concave portion formed on the main body portion side; and the first operation concave portion and the second operation concave portion are combined to form one opening when the pressing plate portion is closed.

The operation and effects of the image forming apparatus having such a configuration will now be described. The image forming apparatus includes a main body portion, and a pressing plate portion arranged to be opened and closed with respect to the main body portion by hand. An operation unit for enabling performance of an open/close operation of the pressing plate portion includes a first operation concave portion formed on the pressing plate portion side and a second operation concave portion formed on the main body portion side. When the pressing plate portion is closed, the first operation concave portion and the second operation concave portion combine to form one opening. That is, instead of forming the operation concave portion only on the pressing plate portion side, one opening is formed by the pressing plate portion side and the main body portion side. Therefore, a dimension in the height direction of the operation concave portion formed on the pressing plate portion can be greatly reduced. Furthermore, since one opening is formed by the pressing plate portion side and the main body portion side, a space necessary for inserting the fingers can be ensured. As a result, an image forming apparatus is provided in which the height of the entire apparatus is greatly reduced without affecting the operability in the case of lifting the pressing plate portion.

In various preferred embodiments of the present invention, an operation panel portion that bulges out (expanding or extending) towards an upper front surface side of the main body portion is further arranged -and it is preferred that the operation panel portion is positioned immediately on a front surface side of the first operation concave portion and the second operation concave portion, and preferred that width dimensions of the portions in the left and the right direction are substantially matched.

The operation panel portion is arranged to perform various operations such as setting of the number of copies, and a recording paper, FAX transmission setting, and the like. The operation panel portion is arranged immediately on the front surface side of the first and second operation concave portions, and the width dimensions of the operation panel portion in the left and right direction is substantially matched with those of the first and second portions, so that the operation concave portions can be arranged to have a natural appearance.

In ,various preferred embodiments of the present invention, it is preferred that the second operation concave portion is formed as a step portion positioned on the front surface side of an outer cover member, and preferred that a panel cover member for constituting the operation panel portion is attached to a lower surface side of the step portion.

The step portion is formed on a front surface side of the outer cover member constituting an appearance of the main body portion so as to function as the second operation concave portion. A panel cover member is arranged separately from the outer cover member to constituting the appearance in the operation panel portion. The strength of the outer cover member can be maintained by forming the step portion, and the attachment strength of the panel cover member can also be maintained since the panel cover member is attached to the lower surface side of the step portion.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a perspective view illustrating an appearance configuration of an image forming apparatus with a pressing plate portion closed.

Fig. 2 is a perspective view illustrating the appearance configuration of the image forming apparatus with the pressing plate portion opened.

Fig. 3 is an enlarged perspective view illustrating only an upper portion of the image forming apparatus.

Fig. 4 is a cross sectional perspective view illustrating an operation unit and a cover configuration.

Fig. 5 is a longitudinal cross sectional view illustrating the operation unit and the cover configuration.

Fig. 6 is a perspective view illustrating a back (reverse) surface side of the pressing plate portion.

### DETAILED DESCRIPTION OF PREFERRED EMBODIMENTS

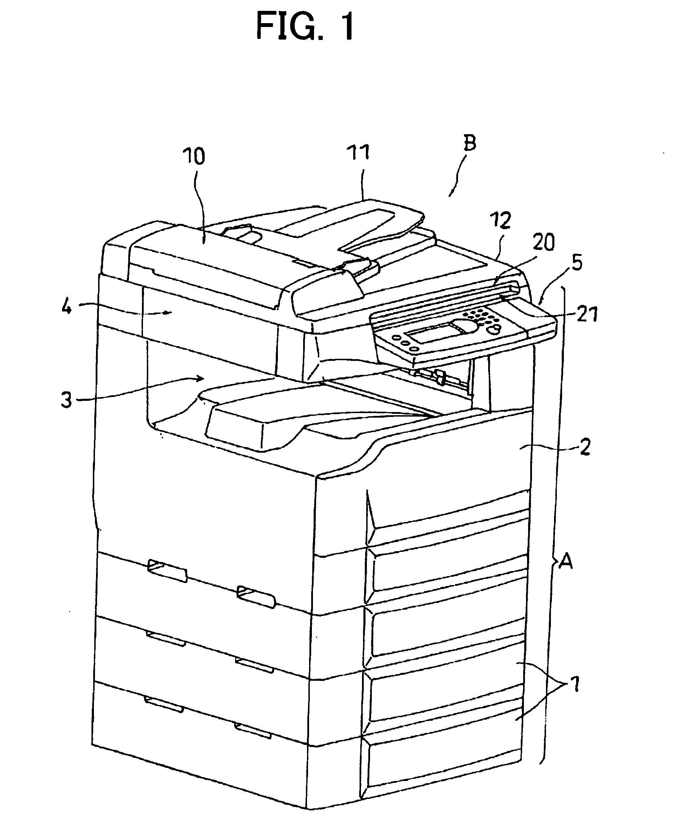

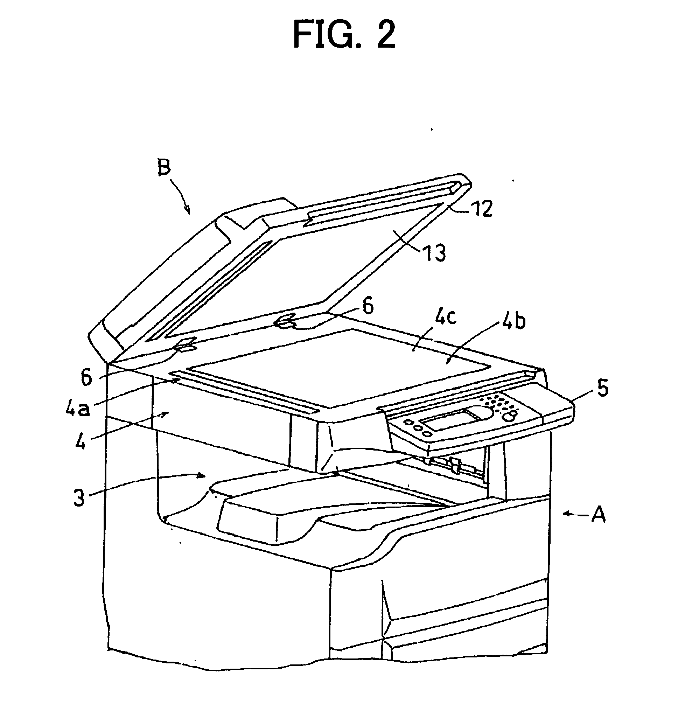

An image forming apparatus according to preferred embodiments of the present invention will now be described using the figures. Fig. 1 is a perspective view illustrating an appearance configuration of the image forming apparatus. Fig. 2 is an appearance perspective view with the pressing plate portion opened.

The image forming apparatus preferably includes a main body portion A and a pressing plate portion B. Main mechanisms necessary for image formation are arranged inside the main body portion A. A recording paper cassette 1 accommodates recording papers of a predetermined size such as A3, A4. The recording paper cassettes 1 are configured to be removably inserted into a near side of the main body portion A.

An image recording unit 2 includes a recording device of an electro-photographic type inside the main body portion A, and preferably includes a photoconductor drum, a charger, an optical writing unit using laser, a developing unit, a transferring unit, a fuser, and the like. A recording paper fed from the recording paper cassette 1 is formed with an image by the image recording unit 2, and discharged to a discharge tray 3.

An image reading unit 4 includes an ADF reading section 4a positioned on a left side end of the apparatus, and a flat bed scanner section (FBS) 4b. The ADF reading section 4a reads an image of a document fed by an automatic document feeder (ADF) 10 arranged on the pressing plate portion B. The FBS 4b has a platen glass 4c, which is equivalent to a document placing surface, on the upper surface thereof, and a document is placed thereon. A read scan device (line sensor) (not illustrated) is arranged under (inside of the unit 4) the platen glass 4c to read a document image while moving under the platen glass 4c in the left and right direction. When reading the document image with the ADF reading section 4a, an image of a document transported by the ADF 10 is read with the read scan device stopped at the section 4a.

An operation panel portion 5 is arranged to bulge out (expand or extend) towards the near side on an upper portion of the main body portion A. Various operation buttons, an operation display unit including a liquid crystal, and the like are arranged on the operation panel portion 5. Various operations such as setting of the number of copies, and a recording paper, FAX transmission setting, and the like are performed by the operation panel portion 5.

The pressing plate portion B can be opened and closed via a hinge mechanism 6 arranged on the far side of the main body portion A. The pressing plate portion B is lifted upward to open a surface of the platen glass 4c in order to place a document on the platen glass 4c. This is the same when taking out the document. A document tray 11 is arranged on an upper portion of the pressing plate portion B along with the ADF 10. By placing documents on the document tray 11, the document transportation by the ADF 10 can be preformed and the image reading in the ADF reading section 4a can be performed.

The appearance of the pressing plate portion B is defined by a platen cover 12. A pressing sheet 13 is attached to a back (reverse) surface of the platen cover 12 so as to press a document placed on the platen glass 4c.

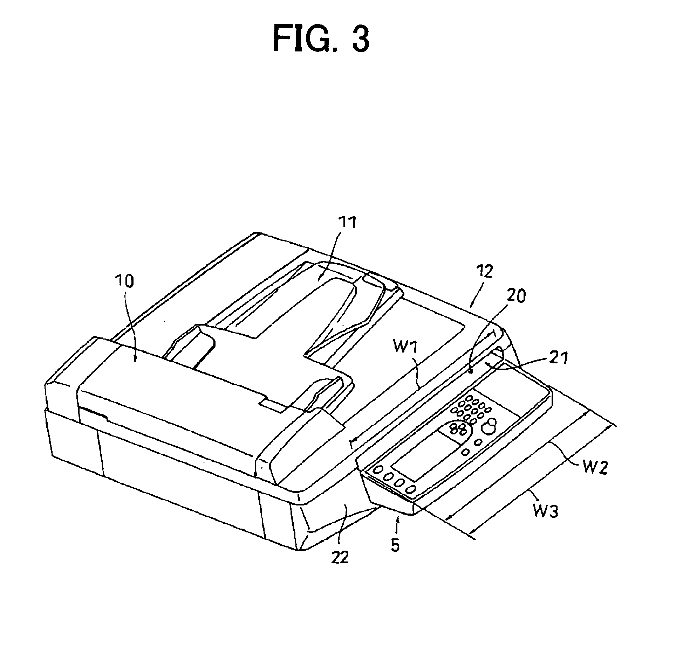

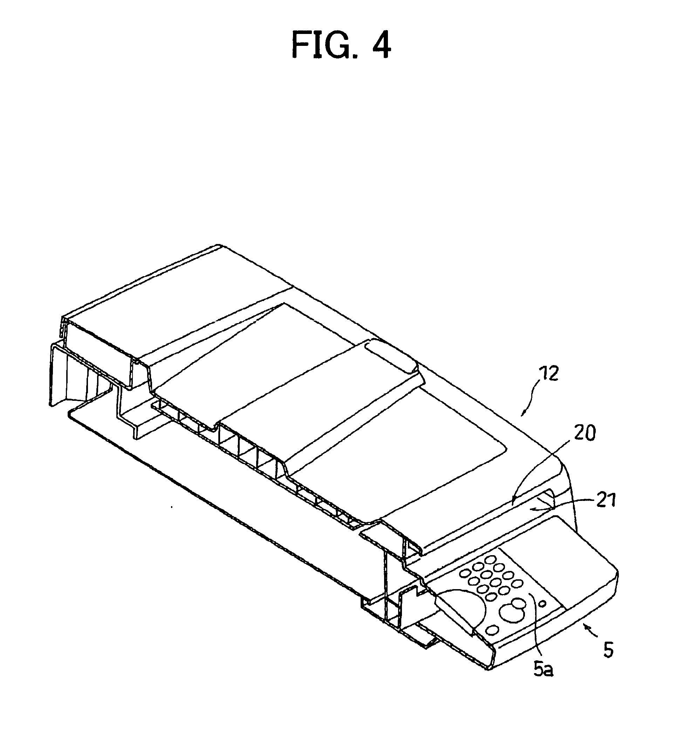

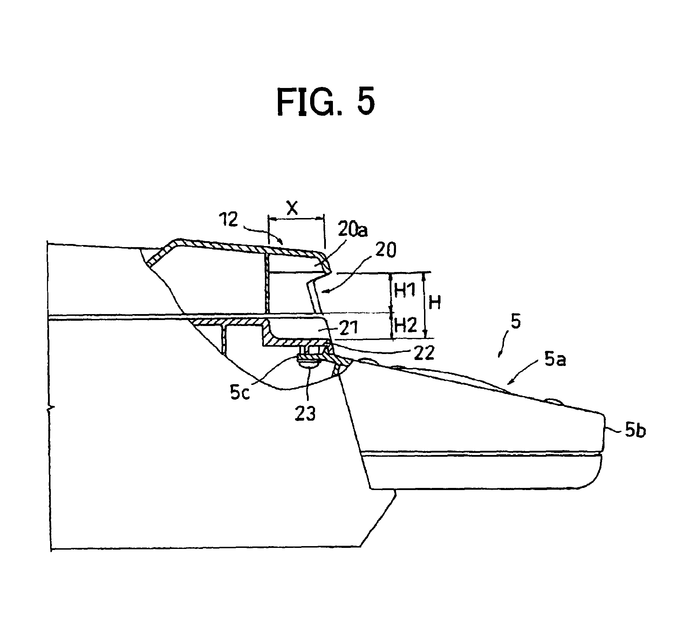

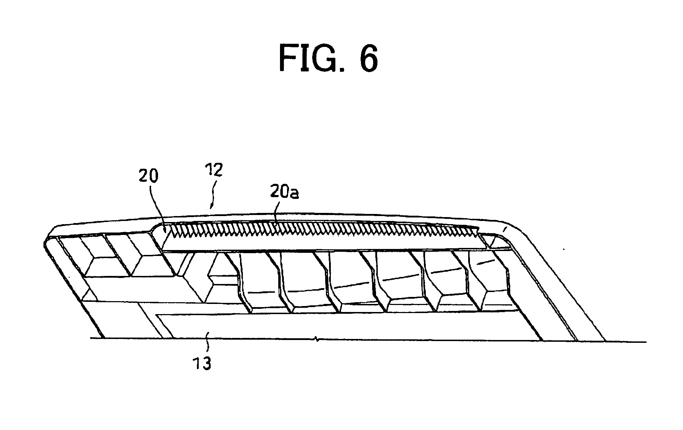

A configuration of the operation unit for enabling performance of an open/close operation of the pressing plate portion B will now be described. Fig. 3 is an enlarged perspective view illustrating only an upper portion of the image forming apparatus, Fig. 4 is a cross sectional perspective view illustrating the operation unit and the cover configuration, and Fig. 5 is a longitudinal cross sectional view illustrating the operation unit and the cover configuration. Fig. 6 is a perspective view illustrating a back (reverse) surface side of the pressing plate portion.

A first operation concave portion 20 is formed on the pressing plate portion B side to constitute the operation unit. The first operation concave portion 20 is provided as a step portion formed on a front side end of the platen cover 12. Furthermore, a second operation concave portion 21 is formed on the main body portion A side. The second operation concave portion 21 is provided as a step portion formed on an upper front surface end of an upper cover 22 of the main body portion A.

A width dimension W1 in the left and right direction of the first operation concave portion 20 and a width dimension W2 in the left and right direction of the second operation concave portion 21 are the same (or substantially the same). The positions in the left and right direction where the first and second operation concave portions 20, 21 are arranged are also the same (or substantially the same). Therefore, one opening is formed by the first operation concave portion 20 and the second operation concave portion 21 when the pressing plate portion B is closed, so that the fingers can be inserted into the opening. As illustrated in Fig. 5, depth dimensions X of the first and second operation concave portions 20, 21 are also substantially the same. The depth dimensions X are set to a dimension that allows the fingers to easily carry out the operation.

A height dimension H (see Fig. 5) of the opening that functions as the operation unit is a dimension obtained by adding a height dimension H1 of the first operation concave portion 20 and a height dimension H2 of the second operation concave portion 21. The dimension H is determined so that the fingers can be easily inserted. According to such a configuration, the height of the operation concave portion formed in the pressing plate portion B is not H but H1, and thus the height of the pressing plate portion B can be greatly reduced. Consequently, the entire height of the image forming apparatus can be greatly reduced. Furthermore, since the second operation concave portion 21 is also formed on the main body portion A side, the height dimension H of the opening is sufficiently ensured taking operability into consideration. Therefore, the operability of the open/close operation of the pressing plate portion B will not be affected.

Similarly, a dimension W3 in the left and right direction of the operation panel portion 5 is the same (or substantially the same) as the dimensions W1, W2 of the first and second operation concave portions 20, 21. The operation panel portion 5 is positioned immediately on a near side of the first and second operation concave portions 20, 21. Therefore, the operation concave portions 20, 21 and the operation panel portion 5 can be arranged so as to have a natural appearance, and visual quality will not be affected. An operation surface 5a of the operation panel portion 5 is inclined downward towards the near side. Therefore, the operation panel portion 5 will not be a hindrance when inserting the fingers into the first and second operation concave portions 20, 21.

As illustrated in Fig. 3, the ADF 10 is positioned on a left side of the apparatus, and the first and second operation concave portions 20, 21 as well as the operation panel portion 5 are arranged so as to be adjacent to the ADF 10. In other words, the first and second operation concave portions 20, 21 and the operation panel portion 5 are arranged closer to the right side overall, thereby enhancing the operability when operating the operation unit or the operation panel portion 5.

Fig. 5 illustrates a cross sectional shape of the platen cover 12. A reinforcement effect of the platen cover 12 itself is enhanced by forming a step difference on a front end surface. In particular, a front surface portion of the platen cover 12 has a shape in which its cover shape is cut at a front end portion due to the presence of the operation panel portion 5, thus making the front surface portion include lowering elements in terms of strength. However, the desired strength can be ensured for the platen cover 12 by forming the step portion.

A back end portion 5c of the panel cover member 5b forming an appearance surface of the operation panel portion 5 is tightened by a screw 23 on a lower surface side of the step portion of the upper cover 22, as illustrated in Fig. 5. Thus, the attachment strength of the panel cover member 5b itself can be ensured, and the overall strength in a state where the upper cover 22 and the panel cover member 5b are coupled can be ensured.

Fig. 6 illustrates a back (reverse) surface side of the platen cover 12. A great number of ribs 20a are formed on an upper side of the first operation concave portion 20. Although the great number of ribs 20a does not enter inside the first operation concave portion 20, the finger tips touch the ribs 20a when the fingers are inserted into the opening. The strength required for the platen cover 12 is ensured by the great number of ribs 20a, and furthermore, the operation feeling when operating with the fingers is prevented from lowering.

A specific configuration of the image forming apparatus according to the present invention is not limited to the configuration described in the present preferred embodiment, and various variants may be contrived.

As illustrated in Fig. 5, when allocating the height dimension H of the opening to the height dimensions H1, H2 of the first and second operation concave portions 20, 21, respectively, the manner of allocating the dimension may be appropriately determined. For example, the dimension allocation may be set approximately such that H1=H2, or may be set such that H1:H2=2:1 as illustrated in Fig. 5. In addition, the height allocation may be set such that H2>H1.

In the present preferred embodiment, the width dimension W3 of the operation panel portion 5 and the width dimensions W1, W2 of the first and second operation concave portions 20, 21 preferably are the same, but do not necessarily need to be the same.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

## Claims

1. An image forming apparatus comprising:
a main body portion A having on an upper surface thereof a document placing surface on which a document is placed;
a pressing plate portion B arranged to be openable/closable with respect to the upper surface of the main body portion A; and
an operation unit arranged to enable performance of an open/close operation of the pressing plate portion B by hand; wherein
the operation unit includes a first operation concave portion 20 located on the pressing plate portion side and a second operation concave portion 21 located on the main body portion side; and
the first operation concave portion 20 and the second operation concave portion 21 are combined to define one opening when the pressing plate portion B is closed.

2. The image forming apparatus according to claim 1, wherein an appearance of the pressing plate portion B is defined by a platen cover 12, and the first operation concave portion 20 is a step portion located on a front side end of the platen cover 12.

3. The image forming apparatus according to claim 2, wherein a plurality of ribs 20a are located on an upper side of the first operation concave portion 20.

4. The image forming apparatus according to claim 2, wherein depth dimensions of the first operation concave portion 20 and the second operation concave portion 21 are substantially the same.

5. The image forming apparatus according to claim 2, wherein positions in the left and right direction where the first operation concave portion 20 and the second operation concave portion 21 are arranged are substantially the same.

6. The image forming apparatus according to claim 2, further including:
an operation panel portion 5 bulging out towards an upper front surface side of the main body portion A; wherein
the operation panel portion 5 is positioned immediately on a front surface side of the first operation concave portion 20 and the second operation concave portion 21, and the width dimensions of the portions 5, 20 and 21 in the left and right direction are substantially matched.

7. The image forming apparatus according to claim 6, wherein an operation surface 5a of the operation panel portion 5 is inclined downward towards a near side.

8. The image forming apparatus according to claim 6, wherein the second operation concave portion 21 includes a step portion positioned on a front surface side of an outer cover member, and a panel cover member constituting the operation panel portion 5 is attached to a lower surface side of the step portion.

9. The image forming apparatus according to claim 8, wherein a height dimension of the opening is arbitrarily allocated to height dimensions of the first operation concave portion 20 and the second operation concave portion 21.
